# EUROPÄISCHE PATENTSCHRIFT

(11) **EP 3 156 917 B1**
(45) Veröffentlichungstag und Bekanntmachung des Hinweises auf die Patenterteilung: **28.04.2021**
(21) Anmeldenummer: 16189470.4
(22) Anmeldetag: 19.09.2016
(51) Int. Cl.: G06F 16/16, G06F 16/13

(54) **VERFAHREN ZUR ABLAGE VON DATEN UND ZUR ABFRAGE DERSELBEN**
METHOD FOR STORAGE AND RETRIEVAL OF DATA
PROCÉDÉ DE CLASSEMENT DE DONNÉES ET D'INTERROGATION DE CELLES-CI

(30) Priorität: 16.10.2015 DE 102015117668
(43) Veröffentlichungstag der Anmeldung: 19.04.2017
(73) Patentinhaber: Sax, Frank, 76199 Karisruhe (DE)
(72) Erfinder: Sax, Frank, 76199 Karisruhe (DE)
(74) Vertreter: 2s-ip Schramm Schneider Bertagnoll Patent- und Rechtsanwälte Part mbB

(56) Entgegenhaltungen:
- US-A1- 2004 230 966
- US-A1- 2013 304 733
- Wardv: "Content-addressable storage - Wikipedia, the free encyclopedia", , 19 December 2012 (2012-12-19), XP055290355, Retrieved from the Internet: URL:https://en.wikipedia.org/w/index.php?t itle=Content-addressable_storage&oldid=528 742595 [retrieved on 2016-07-21]

## Beschreibung

### Gebiet der Erfindung

Die Erfindung betrifft ein Verfahren zur effizienten Abfrage von Daten in einem Computersystem.

### Hintergrund der Erfindung

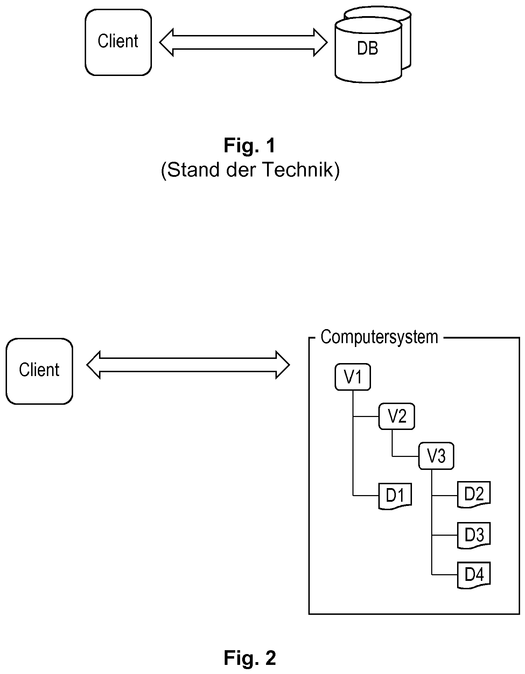

Im Stand der Technik ist es bekannt, Daten in einem Datenbanksystem, etwa ein relationales Datenbanksystem, abzulegen bzw. in einem Datenbanksystem zu speichern. Ein solches aus dem Stand der Technik bekanntes Datenbanksystem DB, auf das mit einem Client zugegriffen werden kann, ist in **Fig. 1** gezeigt. Bei der Datenbank DB kann es sich hierbei um eine zentrale Datenbank oder um eine verteilte Datenbank handeln.

Der Zugriff des Clients auf das Datenbanksystem, um Daten aus dem Datenbanksystem abzufragen, erfolgt mit an das Datenbanksystem angepassten Abfragebefehlen, sogenannten "Queries".

Solche Datenbanksysteme bringen jedoch eine Reihe von Nachteilen mit sich.

So muss beispielsweise die Verfügbarkeit des Datenbanksystems ständig sichergestellt sein, damit etwa Mitarbeitet in einem Unternehmen zu jeder Zeit auf die benötigten Daten zugreifen können. Dies setzt eine permanente Pflege des Datenbanksystems voraus, was zu erheblichen Wartungskosten führen kann.

Solche Datenbanksysteme setzen zudem meist eine spezielle Konfiguration der Hardware voraus, damit gewährleistet ist, dass Datenbankabfragen von dem Datenbanksystems effizient verarbeitet und die abgefragten Daten effizient zur Verfügung gestellt werden können. Auch dies kann zu erheblichen Zusatzkosten führen.

Ein weiterer Nachteil besteht darin, dass ein auf das Datenbanksystem zugreifender Client über einen Datenbankclient verfügen muss. Der Zugriff auf das Datenbanksystem ist damit zwangsläufig auf solche Clients beschränkt, die über einen entsprechenden Datenbankclient verfügen. Ein Zugriff von Clients, die über keinen entsprechenden Datenbankclient verfügen, ist damit nicht möglich. Auch die Datenbankclients müssen regelmäßig gepflegt und bei einer Aktualisierung des Datenbanksystems gegebenenfalls ebenfalls aktualisiert werden. Dies ist wiederum aufwändig und teuer.

Ein noch weiterer Nachteil, insbesondere bei sehr großen Datenmengen, liegt darin, dass auch die Daten selbst entsprechend gepflegt werden müssen, um einen effizienten Zugriff auf die Daten zu ermöglichen. So kann es erforderlich sein, dass nach einer Änderung des Datenbestandes zusätzliche Indizes erzeugt oder vorhandene Indizes aktualisiert werden müssen. Gegebenenfalls kann es sogar erforderlich sein, dass auch die Anwendungen, die mittels des Datenbankclients auf das Datenbanksystem zugreifen, geändert bzw. angepasst werden müssen. Die Pflege der Daten bzw. der Datenbankstrukturen kann zudem nur über spezielle Module erfolgen.

Ferner ist es ein Nachteil, dass Datenauszüge der in dem Datenbanksystem gespeicherten Daten oder eine Replikation der gesamten Datenbank nur mit erheblichen Aufwand bewerkstelligbar ist. Hierzu müssen spezielle Repliziermechanismen zur Verfügung gestellt werden

US 2004/230966 A1 zeigt ein Verfahren und System zur automatischen Benamung von zu speichernden Dateien, wobei die zur Benamung verwendeten Eigenschaften aus den Dateien extrahiert werden.

### Aufgabe der Erfindung

Aufgabe der Erfindung ist es daher, Lösungen bereitzustellen, die die genannten Nachteile zumindest teilweise vermeiden und die es ermöglichen Daten in einem Computersystem so abzulegen, dass eine effiziente Abfrage der Daten möglich ist, wobei
- keine speziellen Datenbankclients notwendig sind, sodass jeder beliebige Client, der auf das Computersystem zugreifen kann, auch auf die dort abgelegten Daten zugreifen kann,
- die Verfügbarkeit der Daten bzw. der Datenablage alleine durch die Verfügbarkeit des Computersystems, in dem die Daten abgelegt sind, und gegebenenfalls durch Verfügbarkeit einer Kommunikationsverbindung zwischen dem Client und dem Datenbanksystem, gewährleistet ist,
- keine spezielle Hardware notwendig ist,
- bei einer Änderung des Datenbestandes, weitestgehend keine Anpassungen von Datenstruktur, Indexstrukturen oder dergleichen notwendig sind,
- die Antwortzeiten für eine Datenabfrage unabhängig von der in dem Computersystem gespeicherten Datenmenge weitgehend konstant niedrig bleiben, und
- ein Replizieren des gesamten Datenbestandes oder eines Teils davon ohne zusätzliche Hilfsmitteln möglich ist.

### Erfindungsgemäße Lösung

Gelöst wird diese Aufgabe mit dem Verfahren nach dem unabhängigen Anspruch. Vorteilhafte Ausgestaltungen und Weiterbildungen der Erfindung sind in den abhängigen Ansprüchen angegeben.

### Kurzbeschreibung der Figuren

Nachstehend wird die Erfindung anhand der Zeichnung, welche lediglich Ausführungsbeispiele der Erfindung darstellt, näher erläutert. Es zeigt:
- Fig. 1: ein Blockdiagramm eines Systems zum Speichern von Daten nach dem Stand der Technik;
- Fig. 2: ein Blockdiagramm zur Verdeutlichung des erfindungsgemäßen Verfahrens zum Ablegen von Daten in einem Computersystem;
- Fig. 3: ein Beispiel einer erfindungsgemäßen Struktur zur Ablage von Daten, zur Verdeutlichung der Vererbung von Daten innerhalb der Struktur;
- Fig. 4: ein Beispiel einer erfindungsgemäßen Struktur zur Ablage von Daten, zur Verdeutlichung des Überschreibens vererbter Daten innerhalb Struktur; und
- Fig. 5: ein Beispiel einer erfindungsgemäßen Struktur zur Ablage von Daten, wobei die Struktur einen Verweis aufweist.

### Detaillierte Beschreibung der Erfindung

**Fig. 2** zeigt den erfindungsgemäßen Aufbau einer Struktur zum Ablegen von Daten.

Die Struktur ist eine als Baumstruktur ausgebildete hierarchische Verzeichnisstruktur. Beispielhaft ist in Fig. 2 eine Verzeichnisstruktur mit drei Verzeichnissen V1 bis V3 gezeigt, wobei das Verzeichnis V2 unterhalb des Verzeichnisses V1 und das Verzeichnis V3 unterhalb des Verzeichnisses V2 angeordnet sind. Innerhalb der Verzeichnisstruktur sind Dateien D1 bis D4 gespeichert, wobei die Datei D1 im Verzeichnis V1 und die Dateien D2 bis D4 in dem Verzeichnis D3 gespeichert sind. Die Verzeichnisstruktur samt der darin gespeicherten Dateien kann auf einem beliebigen Computersystemsystem (=Ablageort) abgelegt sein. Voraussetzung hierfür ist, dass dieses Computersystem von dem Client erreichbar ist, gegebenenfalls über eine Kommunikationsverbindung, etwa das Internet oder ein Firmennetzwerk. Der Ablageort kann beispielsweise ein Fileshare, ein über FTP erreichbarer Speicherort oder auch ein Cloudspeicher sein. Es können beliebige Speichermedien zur Ablage der Verzeichnisstruktur und der Dateien verwendet werden. Einzige Voraussetzung an die Speichermedien und an den Ablageort ist, dass dort Verzeichnisse erzeugt und innerhalb der Verzeichnisse Dateien gespeichert werden können.

Für das Erzeugen der Verzeichnisstruktur und das Speichern bzw. Lesen der Dateien in bzw. von dem Ablageort können die von dem am Ablageort vorgesehenen Betriebssystem zur Verfügung gestellten Mittel verwendet werden. Es sind keinerlei darüber hinausgehende Mittel, etwa spezielle Verwaltungs- oder Managementprogramme, notwendig. Ferner kann auf den Einsatz von aus dem Stand der Technik bekannter Datenbanksysteme vollständig verzichtet werden.

Der Client muss lediglich die Möglichkeit haben auf die Verzeichnisse und auf die Dateien zumindest lesend zugreifen zu können. Auch hierbei reichen die von dem jeweiligen Betriebssystem bereitgestellten Mittel aus. Spezielle Clientanwendungen, etwa Datenbankclients, wie sie aus dem Stand der Technik bekannt sind, sind hierfür nicht notwendig. Zudem kann auch die Pflege der abgelegten Daten ohne Zusatzsoftware bewerkstelligt werden.

Im Ergebnis bedeutet das, dass die Daten in jedem System, welches vorstehend genannte Verzeichnisstrukturen unterstützt, erfindungsgemäß gespeichert werden können.

Ein wesentliches Merkmal der Erfindung ist die atomare Datenhaltung. Das heißt, dass für jedes Datum der abzulegenden Daten eine Datei erzeugt wird, die in einem Verzeichnis der Verzeichnisstruktur gespeichert wird. Eigenschaften des in der Verzeichnisstruktur abzulegenden Datums werden in dem Dateinamen codiert. Der Dateinamen repräsentiert somit eine Kennung der in der Datei gespeicherten Daten. Grundsätzlich können beliebig viele Eigenschaften im Dateinamen codiert werden. Die Eigenschaften können beispielsweise den Typ der Daten, das Format der Daten, oder sonstige Metainformationen umfassen.

Die Codierung der Eigenschaften in dem Dateinamen erfolgt vorzugsweise nach einem vorbestimmen Muster bzw. nach vorbestimmten Regeln. Lediglich beispielhaft sei nachfolgende Codierungsvorschrift genannt, anhand der Dateinamen aus vier Eigenschaften gebildet werden können:
<Typ>.<Variable>.<Sprache>.<Format>
wobei <Typ> den Typ des Dateiinhaltes, <Variable> eine beliebige zu spezifizierende Eigenschaft des Dateiinhaltes, <Sprache> die Sprache des Dateiinhaltes und <Format> das Format des Dateiinhaltes sind.

Zwei konkrete Beispiele für Dateinamen, die gemäß vorstehender Codierungsvorschrift erzeugt wurden, sind nachfolgend angeführt. Die Eigenschaft <Variable> soll hierbei den Wert "TOP1" annehmen und definieren, dass es sich bei dem Dateiinhalt um die beliebteste Sehenswürdigkeit handelt:
Die Datei
Bild.Topl.all.jpg
speichert demnach ein sprachunabhängiges (Sprache = all) Bild der beliebtesten Sehenswürdigkeit im JPG-Format, und die Datei
Bild.Topl.fr.png speichert ein Bild in französischer Sprache (etwa wenn das Bild Textbestandteile aufweist) der beliebtesten Sehenswürdigkeit im PNG-Format.

Es sei erwähnt, dass nicht notwendiger Weise "sprechende" Eigenschaftswerte vorgesehen werden müssen. Die Eigenschaftswerte können selbst wiederum codiert werden und jeweils einem "sprechenden" Wert zugeordnet sein, beispielsweise
Bild → 3
pnf → ab
jpg → ac

Die beiden vorstehend genannten Dateinamen würden dann lauten:
3.Topl.all.ac für Bild.Topl.all.jpg
   und
3.Topl.fr.ab für Bild.Topl.fr.png

Für eine benutzerfreundliche Recherche bzw. Datenabfrage können dem Benutzer die "sprechenden" Werte zur Auswahl zu Verfügung gestellt werden. Der vom Benutzer für die jeweilige Eigenschaft ausgewählte Wert muss dann lediglich in den codierten Wert überführt werden, um daraus den Dateinamen zu bilden, der gesucht werden soll.

Die dem Benutzer zur Verfügung gestellten "sprechenden" Werte können zudem sprachabhängig sein, sodass ein Wert in unterschiedlichen Sprachen immer demselben codierten Eigenschaftswert zugeordnet ist, beispielsweise
Bild → 3
image → 3

Die codierte Form der Eigenschaftswerte hat den Vorteil, dass die Dateinamen deutlich kompakter bzw. kürzer gehalten werden können, um gegebenenfalls vorhandene Längenbeschränkungen für Dateinamen (etwa wenn das Betriebssystem des Ablageortes nur Dateinamen mit einer bestimmten Maximallänge zulassen) entgegenzuwirken. Dies ist insbesondere dann vorteilhaft, wenn eine große Anzahl von Eigenschaften in den Dateinamen codiert werden sollen.

Die Hierarchie der Daten wird durch die vorstehend genannte Verzeichnisstruktur festgelegt. Beim Aufbau der Verzeichnisstruktur muss lediglich beachtet werden, dass die Namen der Verzeichnisse innerhalb einer Ebene eindeutig sind, das heißt, dass direkt unterhalb eines Verzeichnisses sämtliche Verzeichnisse unterschiedliche Namen aufweisen müssen. Identische Verzeichnisnamen dürfen allerding verwendet werden, wenn diese Verzeichnisse unter verschiedenen Verzeichnissen angeordnet sind. Die Anzahl der Verzeichnisebenen ist prinzipiell nicht begrenzt. Es hat sich jedoch gezeigt, dass in der Praxis maximal zehn bis fünfzehn Verzeichnisebenen auch für komplexe Datenablagen ausreichend sind. Ebenso ist die Breite der Verzeichnisstruktur, das heißt, die Anzahl der Verzeichnisse in einer Verzeichnisebene, nicht begrenzt. Die Breite der Verzeichnisstruktur hat keine Auswirkung auf die Geschwindigkeit der Datenabfrage, die weiter unten näher beschrieben wird.

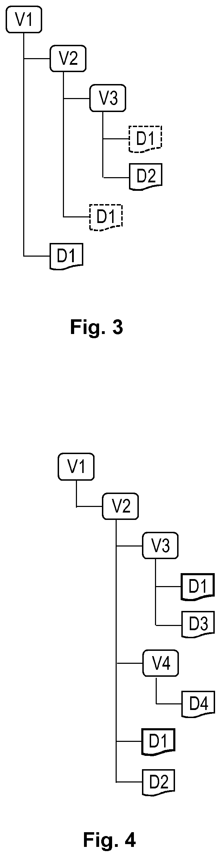

Innerhalb dieser Verzeichnisstruktur werden die Dateien, die wie vorstehend beschrieben erzeugt wurden, abgelegt. Hierbei gilt, dass die Dateien in einem Verzeichnis verschiedene Namen aufweisen müssen. Allerdings kann eine Datei mit demselben Dateinamen in unterschiedlichen Verzeichnissen abgelegt werden, sodass diese Datei in der Verzeichnisstruktur durchaus mehrfach vorkommen kann, was insbesondere bei dem mit Bezug auf Fig. 4 beschriebenen Konzept der "Überschreibung vererbter Daten" wichtig ist.

Ein weiteres wesentliches Merkmal der Erfindung ist hierbei, dass der Name des Wurzelverzeichnisses V1 und die Namen der unter dem Wurzelverzeichnis angeordneten Verzeichnisse V2 bis V4 jeweils zumindest ein Suchkriterium für die Abfrage der Daten bilden. Ein Benutzer kann hierbei durch Angabe der Suchkriterien und durch Angabe der vorstehend genannten Eigenschaften des Datums die gewünschten Daten abfragen, ohne dass hierzu ein Datenbanksystem notwendig wäre. Ein Beispiel mit drei Suchkriterien und zwei Dateien, die jeweils durch vier Eigenschaften spezifiziert sind, ist nachfolgend angegeben: 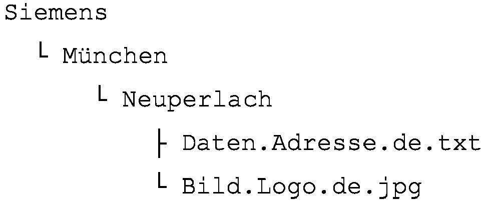 wobei Siemens, München und Neuperlach die Verzeichnisnamen und damit die Suchkriterien und Daten.Adresse.de.txt und Bild.Logo.de.jpg die Dateien, die die jeweiligen Daten speichern, sind.

Die Datei Daten. Adresse. de. txt speichert hierbei Inhalte vom Typ "Daten", wobei in diesem Beispiel konkret Daten mit der Variable "Adresse" im Format "txt" und mit der Eigenschaft "Sprache = de" gespeichert sind. Das heißt, die Datei Daten. Adresse. de. txt speichert die deutsche Schreibweise der Adresse von Siemens in München am Standort Neuperlach im Text-format. Entsprechendes gilt für die Datei Bild. Logo. de. jpg, die hier das deutschsprachige Logo als Bild im Format "jpg" speichert.

Auch für die Verzeichnisse gilt, dass nicht "sprechende Namen" verwendet werden müssen. Wie bei den vorstehend beschriebenen Dateinamen können auch die Verzeichnisnamen codiert werden. So kann beispielsweise dem Verzeichnis "Siemens" der Wert "xyz" zugeordnet werden. Dieses Verzeichnis würde dann unter dem Namen "xyz" gespeichert werden. Bei der Festlegung der Suchkriterien kann der Benutzer dennoch den Wert "Siemens" angeben, der bei Datenabfrage dann nach "xyz" aufgelöst wird.

Das Codieren der Verzeichnisnamen hat den Vorteil, dass dem Benutzer Suchwerte bereitgestellt werden können, die Zeichen enthalten, die das zugrundeliegende Betriebssystem für Verzeichnisnamen nicht zulässt. Es muss lediglich gewährleistet werden, dass die codierten Suchwerte nur zulässige Zeichen enthält. Ein weiterer Vorteil liegt darin, dass die Suchwerte sprachabhängig sein können - ein Suchwert in unterschiedlichen Sprachen muss dann lediglich auf ein und denselben codierten Suchwert abgebildet werden. Ferner können die Suchwerte eine beliebige Länge aufweisen und unterliegen nicht den Längenrestriktionen des zugrundeliegenden Betriebssystems.

Die Suchkriterien können dem Benutzer beispielsweise in Form eines Baumes (z.B. als aufklappbarer XML-Baum) zur Verfügung gestellt werden, wobei der Baum die Suchkriterien als "sprechende Namen" enthält. Der Baum selbst kann sprachabhängig sein. Durch Auswahl eines Knotens in dem Baum werden die Suchkriterien von der Wurzel des Baumes bis zum ausgewählten Knoten festgelegt.

Anhand vorstehenden Beispiels und mit Bezug auf Fig. 3 bis Fig. 5 wird nachfolgend die erfindungsgemäße Datenabfrage näher beschrieben.

Abgefragt werden soll der Inhalt der Variablen "Adresse" vom Typ "Daten" im Format "txt" mit der Eigenschaft "Sprache = de" unter Verwendung der Suchkriterien "Siemens", "München" und "Neuperlach".

Hierzu wird aus den Suchkriterien ein Verzeichnispfad und aus den Eigenschaften ein Dateiname erzeugt. Die Datei mit dem Dateinamen in dem Verzeichnispfad wird geöffnet und der Inhalt der geöffneten Datei wird dem Benutzer als Ergebnis der Datenabfrage bereitgestellt.

Im Pseudocode kann dies wie folgt angegeben werden:

```
        Verzeichnispfad := \ + Siemens + \ + München + \ + Neuperlach + \
        Dateiname := Daten + . + Adresse + . + de + . + txt
        cd Verzeichnispfad
        open (Dateiname)
```

Ist die gesuchte Datei mit dem Dateinamen im Verzeichnispfad nicht vorhanden, so ist diese Datei entweder in der Verzeichnisstruktur gar nicht vorhanden, oder die gesuchte Datei wird von einem übergeordneten Verzeichnis geerbt.

Wie vorstehend dargestellt, besteht eine Datenabfrage aus einem Verzeichnis bzw. Verzeichnispfad und einem Dateinamen. Unter Verwendung eines bekannten Verzeichnispfades (=Suchkriterien) und eines bekannten Dateinamens (=Eigenschaften der Daten) kann besonders schnell auf die abzufragenden Daten zugegriffen werden, denn eine zusätzliche Suche in den Dateiverwaltungsinformationen (etwa auf die Master File Table des Dateisystems NTFS) kann vermieden werden, sodass auf die abzufragenden Daten direkt zugegriffen werden kann. Versuche haben gezeigt, dass die Zugriffszeiten auf eine Datei mit bekannten Dateinamen und bekanntem Verzeichnispfad bei einer langsamen Festplatte zum Beispiel bei etwa 18 µs liegt. Vorteilhaft ist hierbei zudem, dass die Zugriffszeiten unabhängig von der Anzahl der Dateien in der Verzeichnisstruktur und unabhängig von der Größe der Dateien selbst sind.

Anhand von **Fig. 3** wird nachfolgend das Prinzip der Vererbung von Daten innerhalb einer Verzeichnisstruktur beschrieben.

Die in Fig. 3 gezeigte Verzeichnisstruktur ist hier identisch zu der in Fig. 2 gezeigten Verzeichnisstruktur. In dem Verzeichnis V1 (=Wurzelverzeichnis) ist die Datei D1 abgelegt. In dem Verzeichnis V3 ist die Datei D2 abgelegt. In jeweils einer gestrichelten Box sind in den Verzeichnissen V2 und V3 ebenfalls Dateien D1 dargestellt, die allerdings nicht in diesen Verzeichnissen gespeichert sind, sondern von dem Verzeichnis V1 in das jeweilige Verzeichnis V2, V3 vererbt werden. Vererben bedeutet hier, dass in einem Verzeichnis, welches durch die Suchkriterien festgelegt ist, auch Dateien verfügbar gemacht werden, die in einem übergeordneten Verzeichnis abgelegt sind. Gemäß dem in Fig. 3 gezeigten Beispiel kann die Datei D1, die im Verzeichnis V1 abgelegt ist, auch in den darunterliegenden Verzeichnissen D2 und D3 abgefragt werden. Damit können in einem Verzeichnis Daten abgelegt werden, die für alle untergeordneten Verzeichnisse bzw. Suchkriterien gültig sind.

So kann in dem vorstehend Beispiel in dem Verzeichnis Siemens die Datei Daten. Vorstand. txt gespeichert werden, wobei in dieser Datei Informationen zum Vorstand der Firma Siemens gespeichert sind.

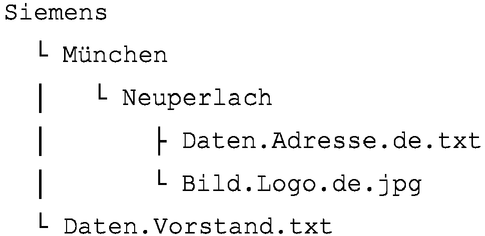

Damit kann unter Verwendung der Suchkriterien "Siemens", "München" und "Neuperlach" der Inhalt der Variablen "Vorstand" vom Typ "Daten" im Format "txt" abgefragt werden, obwohl im Verzeichnis Siemens\München\Neuperlach diese Informationen nicht gespeichert sind.

Um eine vererbte Datei abzufragen, wird beginnend von dem durch die Suchkriterien angegebenen Verzeichnis der Verzeichnispfad solange nach oben bis zum Wurzelverzeichnis durchsucht, bis die Datei gefunden wurde. Wird die Datei vor erreichen des Wurzelverzeichnis gefunden endet die Suche.

Im Pseudocode kann dies wie folgt angegeben werden:

```
        Verzeichnispfad := \ + Siemens + \ + München + \ + Neuperlach + \
        Dateiname := Daten + . + Vorstand + . + txt
        solange Dateiname nicht gefunden
            cd Verzeichnispfad
            if open (Dateiname)
                 Abbrechen und Inhalt der Datei bereitstellen
            else
                 Verzeichnispfad := übergeordnetes Verzeichnis
            endif
```

Es kann vorkommen, dass eine in einem Verzeichnis abgelegte Datei bzw. die in dieser Datei gespeicherten Daten nicht für alle untergeordneten Verzeichnisse gültig sind. Erfindungsgemäß ist es hierbei vorgesehen, dass die vererbte Datei in jenen untergeordneten Verzeichnissen überschrieben wird, in den die vererbte Datei keine Gültigkeit haben soll.

**Fig. 4** zeigt eine beispielhafte Verzeichnisstruktur, mit vier Verzeichnissen V1 bis V4, wobei das Verzeichnis V2 unterhalb des Verzeichnisses V1 und die Verzeichnisse V3 und V4 unterhalb des Verzeichnisses V2 angeordnet sind. Sowohl in dem Verzeichnis V2 als auch in dem Verzeichnis V3 ist eine Datei D1 abgelegt. Die Datei D1 weist in beiden Fällen denselben Dateinamen auf.

Gemäß der mit Bezug auf Fig. 3 beschriebenen Vererbung würde die Datei D1 in dem Verzeichnis V2 auch in dem Verzeichnis V3 verfügbar gemacht werden. Weil allerdings in dem Verzeichnis V3 eine Datei D1 mit demselben Dateinamen abgelegt ist, wird bei der Abfrage der Datei D1 in dem Verzeichnis V3 nicht der Inhalt der Datei D1 aus dem Verzeichnis V2 sondern der Inhalt der Datei D1 aus dem Verzeichnis V3 bereitgestellt. Durch das Ablegen der Datei D1 in dem Verzeichnis V3 wird als die Vererbung der Datei D1 aus dem Verzeichnis V2 unterbrochen. Alle unter dem Verzeichnis V3 angeordneten Verzeichnisse erben die Datei D1 aus dem Verzeichnis V3.

Das Verzeichnis V4 hingegen erbt die Datei D1 aus dem Verzeichnis V2, weil in dem Verzeichnis V4 keine Datei D1 abgelegt ist, die die Datei D1 aus dem Verzeichnis V2 überschreiben könnte.

In bestimmten Anwendungsfällen ist es wünschenswert, nicht nur den Inhalt einer Variablen bzw. einer Datei in einem bestimmten Verzeichnis abzufragen, sondern die Inhalte sämtlicher Variablen bzw. Dateien, die sich in dem durch die Suchkriterien angegebenen Verzeichnis und in allen darüber liegenden Verzeichnissen bis zum Wurzelverzeichnis befinden. Damit lassen sich komplexe Datenabfragen realisieren. In diesem Fall beginnt die Datenabfrage in dem durch die Suchkriterien angegebenen Verzeichnis und stellt die Inhalte sämtlicher Dateien dem Benutzer zur Verfügung. Dieser Vorgang wird nach oben bis zum Wurzelverzeichnis wiederholt. Befindet sich allerdings in einem übergeordneten Verzeichnis eine Datei mit einem Dateinamen, der bereits für eine Datei in einem untergeordneten Verzeichnis verwendet wurde, so wird diese Datei ignoriert (weil diese Datei ja von der Datei in dem untergeordneten Verzeichnis überschrieben wird und daher in dem untergeordneten Verzeichnis keine Gültigkeit hat).

Bei dem in Fig. 4 gezeigten Beispiel würden bei einer Datenabfrage aller für den Knoten V3 gültigen Daten die Inhalte der Dateien D3 und D2 sowie der Inhalt der Datei D1 aus dem Verzeichnis V3 als Ergebnis bereitgestellt werden. Der Inhalt der Datei D1 aus dem Verzeichnis V2 würde nicht berücksichtigt werden.

In der Praxis kann es vorkommen, dass einzelne Eigenschaften der abzufragenden Daten nicht bekannt oder undefiniert sind. So können beispielsweise einzelne Daten trotz prinzipiell vorgegebenen Sprachabhängigkeit sprachunabhängig sein oder die Datei in der abgefragten Sprache nicht vorhanden sein. Beispielsweise kann es vorgesehen sein, dass in dem oben angegebenen Beispiels die Adresse immer sprachabhängig in dem jeweiligen Verzeichnis abzulegen ist, d.h. der Dateiname in der Form
Daten.Adresse.de.txt
anzugeben ist, wobei "de" Sprache der in dieser Datei gespeicherten Adresse angibt. Es kann nun vorkommen, dass die Adresse nur in den Sprachen "de", "en" und "fr" abgelegt ist. Eine Abfrage der Adresse in der Sprache "it" würde dann kein Ergebnis liefern.

Für diesen Fall ist es erfindungsgemäß vorgesehen, dass für einige oder alle Eigenschaften der abzulegenden Daten sogenannte Rückfalleigenschaften definiert werden können. Wird ein Datum mit einer gewünschten Eigenschaft nicht gefunden, so wird alternativ das Datum mit der für diese Eigenschaft vorgesehenen Rückfalleigenschaft gesucht. Gemäß dem vorstehenden Beispiel liefert
Daten.Adresse.it.txt
kein Ergebnis. Für die Eigenschaft "it" ist eine Rückfalleigenschaft "all" definiert, sodass eine alternative Datenabfrage mit
Daten.Adresse.all.txt
durchgeführt wird. Selbstverständlich muss in dem abgefragten Verzeichnis bzw. in einem der übergeordneten Verzeichnisse (in Falle der Vererbung) ein entsprechende Datei abgelegt sind.

Im Pseudocode (für obiges Beispiels) kann dies wie folgt angegeben werden:

```
        Verzeichnispfad := \ + Siemens + \ + München + \ + Neuperlach + \
        Dateiname := Daten + . + Adresse + . + de + . + txt
        Rückfall := Daten + . + Adresse + . + all + . + txt
        solange Dateiname nicht gefunden
            cd Verzeichnispfad
            if open (Dateiname)
                 Abbrechen und Inhalt der Datei bereitstellen
            else if open (Rückfall)
                 Abbrechen und Inhalt der Datei bereitstellen
            else
                 Verzeichnispfad := übergeordnetes Verzeichnis
            endif
```

Es kann vorteilhaft sein, ein Datum in einer Verzeichnisstruktur nur einmal zu speichern, obwohl dieses Datum in anderen Verzeichnissen ebenfalls benötigt wird, aber nicht von einem übergeordneten Verzeichnis geerbt werden kann, und daher auch in den anderen Verzeichnissen gespeichert werden müsste. Beispielsweise hat ein Unternehmen drei Abteilungen, wobei zwei Abteilungen eine bestimmte, identische Dokumentenvorlage benötigen.

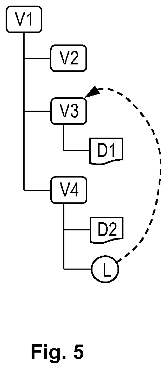

Eine entsprechende Verzeichnisstruktur ist in **Fig. 5** gezeigt. Das Wurzelverzeichnis V1 repräsentiert das Unternehmen, die Verzeichnisse V2 bis V4 repräsentieren die drei Abteilungen dieses Unternehmens. In dem Verzeichnis V3 ist eine Dokumentenvorlage D1 gespeichert, die auch in dem Verzeichnis V4 zur Verfügung gestellt werden muss, weil auch die dem Verzeichnis V4 zugeordnete Abteilung die Dokumentenvorlage D1 benötigt.

Gemäß dem zuvor beschriebenen Verfahren müsste die Dokumentenvorlage auch in dem Verzeichnis V4 abgelegt werden. Dies hat allerdings den Nachteil, dass bei einer Änderung der Dokumentenvorlage D1 in dem Verzeichnis V3 auch die in dem Verzeichnis V4 abgelegt Dokumentenvorlage D1 geändert werden müsste.

Alternativ könnte die Dokumentenvorlage D1 auch in dem Verzeichnis V1 abgelegt werden, wodurch sie in die Verzeichnisse V3 und V4 vererbt werden würde. Dies ist allerdings nicht wünschenswert, weil dann die Dokumentenvorlage D1 auch in das Verzeichnis V2 vererbt werden würde, was nicht gewollt ist.

Um ein Datum dennoch in anderen Verzeichnissen verfügbar zu machen, ohne dass das Datum in diesen Verzeichnissen ebenfalls abgelegt werden muss, ist es erfindungsgemäß vorgesehen, in diesen Verzeichnissen jeweils eine Verweisdatei L zu speichern. Die Verweisdatei L enthält eine oder mehrere Pfandangaben, die bei der Datenabfrage dann ebenfalls berücksichtigt werden. Logisch betrachtet bedeutet dies, dass der Inhalt der durch die Pfadangaben der Verweisdatei L festgelegten Verzeichnisse zum Inhalt jenes Verzeichnisses wird, in dem die Verweisdatei L abgelegt ist.

Bei dem in Fig. 5 gezeigten Beispiel ist in dem Verzeichnis V4 eine Verweisdatei L gespeichert, die einen Link zum Verzeichnis V3 enthält. Damit wird bei einer Datenabfrage in dem Verzeichnis V4 auch der Inhalt des Verzeichnisses V3 berücksichtigt. Die in dem Verzeichnis V3 abgelegte Dokumentenvorlage D1 kann somit auch in dem Verzeichnis V4 abgefragt werden, obwohl sie dort nicht abgelegt ist.

Bei dem in Fig. 5 gezeigten Beispiel verweist die in der Verweisdatei gespeicherte Pfadangabe auf ein Verzeichnis innerhalb der Verzeichnisstruktur. Erfindungsgemäß ist es aber auch möglich, dass die Pfadangabe in der Verweisdatei auf ein Verzeichnis außerhalb der Verzeichnisstruktur oder auf einen anderen Speicherort verweisen kann. So kann beispielsweise die Pfadangabe der Verweisdatei, die in einer lokalen Verzeichnisstruktur gespeichert ist, auf ein Verzeichnis verweisen, das in einem Cloudspeicher gespeichert ist.

Ferner erlaubt die erfindungsgemäße Datenablage eine besonders einfache Replikation der gesamten Daten oder eines Teils der Daten. Hierzu muss lediglich die Verzeichnisstruktur beginnend mit dem Wurzelverzeichnis oder beginnend mit einem Unterverzeichnis (wenn nur ein Teil der Daten repliziert werden soll) samt den in der Verzeichnisstruktur abgelegten Dateien an einen anderen Speicherort kopiert werden. Beispielsweise kann die Verzeichnisstruktur oder ein Teil davon in eine lokale Speichereinrichtung des Clients kopiert werden, sodass die Daten auch offline beim Client zur Verfügung stehen.

In ähnlicher Weise werden können die replizierten Daten auch aktualisiert werden. Hierzu werden die replizierten Verzeichnisse und die darin gespeicherten Dateien mit den Verzeichnisses und Dateien des Quellsystems verglichen und die Änderungen in den replizierten Daten nachgezogen.

Mit der vorliegend Erfindung werden eine effiziente Datenablage und insbesondere eine effiziente Datenabfrage möglich, ohne dass hierzu kostspielige und wartungsintensive Datenbanksysteme notwendig sind. Versuche haben gezeigt, dass mehrere hunderttausend parallele Datenabfragen möglich sind, ohne dass die Antwortzeiten merklich negativ beeinflusst werden. Die Antwortzeiten lagen jeweils deutlich unter 100 µs. Bei langsamen Speichermedien, etwa einer langsamen Festplatte, lagen die Antwortzeiten bei zwischen 18 µs und 45 µs. Ebenfalls haben Versuche gezeigt, dass die Antwortzeiten auch unabhängig von der Datenmenge sind. So konnten Datenabfragen in einem Datenbestand von mehreren Terabyte durchgeführt werden, wobei die Antwortzeiten ebenfalls jeweils deutlich unter 100 µs lagen.

Bezugszeichen:
- D1 bis D4: Daten bzw. Dateien
- DB: Datenbank nach dem Stand der Technik
- L: Datei mit einem Verweis auf ein anderes Verzeichnis
- V1 bis V4: Verzeichnisse der Verzeichnisstruktur

## Patentansprüche

1. Verfahren zur effizienten Abfrage von Daten in einem Computersystem, wobei
- für jedes Datum eine Datei gespeichert ist, wobei Eigenschaften des Datums in dem Dateinamen der Datei codiert sind,
- in dem Computersystem eine als Baumstruktur ausgebildete hierarchische Verzeichnisstruktur mit einem Wurzelverzeichnis gespeichert ist, wobei in jeder Ebene der Verzeichnisstruktur sowohl Dateien als auch Verzeichnisse liegen können, wobei jedes Verzeichnis innerhalb einer Ebene der Verzeichnisstruktur einen eindeutigen Verzeichnisnamen aufweist, und wobei jeder Verzeichnisname und der Name des Wurzelverzeichnisses jeweils ein Suchkriterium zur Abfrage der Daten bilden,
- die gespeicherte Datei unter dem Dateinamen in zumindest einem Verzeichnis der Verzeichnisstruktur gespeichert ist, wobei das in dem Verzeichnis mit der Datei gespeicherte Datum anhand der Eigenschaften des Datums und der Suchkriterien des Verzeichnispfades vom Verzeichnis, in dem die Datei gespeichert ist, bis zum Wurzelverzeichnis abfragbar ist,
wobei in einem Verzeichnis der Verzeichnisstruktur eine Verweisdatei gespeichert ist, wobei die Verweisdatei zumindest eine Pfadangabe enthält, mit der ein weiteres Verzeichnis der Verzeichnisstruktur oder ein Speicherort außerhalb der Verzeichnisstruktur identifizierbar ist,
und das Computersystem zur Abfrage der Daten
- die Eigenschaften der abzufragenden Daten festlegt,
- eine Anzahl von Suchkriterien in einer vorbestimmten Reihenfolge festlegt,
- wobei die Eigenschaften und die Suchkriterien von einem Benutzer angegeben werden,
- aus den festgelegten Eigenschaften und Suchkriterien ein Dateiname und ein Verzeichnispfad bildet, wobei der Dateiname aus den festgelegten Eigenschaften durch ein Verknüpfen der festgelegten Eigenschaften und der Verzeichnispfad aus den Suchkriterien durch ein Verknüpfen der Suchkriterien gebildet werden,
- in das durch den Verzeichnispfad angegebene Verzeichnis wechselt und die durch den Dateinamen angegebene Datei öffnet,
- wobei für zumindest eine Eigenschaft der abzufragenden Daten ein Standardwert festgelegt wird, wobei der Dateiname aus dem Standardwert und den übrigen Eigenschaften gebildet wird, wenn die Datei mit dem durch die festgelegten Eigenschaften gebildeten Dateinamen in dem Verzeichnispfad nicht enthalten ist,
- wobei, wenn die durch den Dateinamen angegebene Datei nicht in dem durch den Verzeichnispfad angegebenen Verzeichnis vorhanden ist, die Datei in übergeordneten Verzeichnissen des Verzeichnispfades gesucht wird, wobei die durch den Dateinamen angegebene Datei in den übergeordneten Verzeichnissen des Verzeichnispfades geöffnet wird, und
- aus der Verweisdatei die Pfadangabe ausliest und zum Abfragen der Daten in das durch die Pfadangabe angegebene Verzeichnis wechselt, um dort die durch den Dateinamen angegebene Datei zu suchen,
- den in der geöffneten Datei enthaltenen Inhalt als Ergebnis der Abfrage bereitstellt.

2. Verfahren nach Anspruch 1, wobei die Eigenschaften einen Typ, eine Variable und/oder ein Format umfassen.

3. Verfahren nach einem der vorhergehenden Ansprüche, wobei die Datei in mehreren Verzeichnissen unter demselben Dateinamen gespeichert wird.

4. Verfahren nach einem der vorhergehenden Ansprüche, wobei die in einem Verzeichnis gespeicherte Datei eine in dieses Verzeichnis vererbte Datei überschreibt, wodurch die Vererbungshierarchie unterbrochen wird, sofern die in diesem Verzeichnis gespeicherte Datei und die in dieses Verzeichnis vererbte Datei denselben Dateinamen aufweisen.

5. Verfahren nach dem vorhergehenden Anspruch, wobei die zumindest eine Pfadangabe eine relative und/oder absolute Pfadangabe umfasst.

6. Verfahren nach einem der vorhergehenden Ansprüche, wobei die Verzeichnisstruktur oder ein Ausschnitt der Verzeichnisstruktur zusammen mit den in den Verzeichnissen gespeicherten Dateien repliziert werden, wobei das Replizieren ein Kopieren der entsprechenden Verzeichnisstruktur und der darin gespeicherten Dateien an einen anderen Speicherort umfasst.

7. Verfahren nach einem der vorhergehenden Ansprüche, wobei eine Datei in den übergeordneten Verzeichnissen ignoriert wird, wenn eine Datei mit demselben Dateinamen bereits in einem darunterliegenden Verzeichnis vorhanden ist.

## Claims

1. Method for efficiently querying data in a computer system, wherein
- a file is stored for each date item, wherein properties of the date item are encoded in the file name of the file,
- a hierarchical directory structure, in the form of a tree structure, with a root directory is stored in the computer system, wherein both files and directories can be located in each level of the directory structure, wherein each directory within a level of the directory structure has a unique directory name, and wherein each directory name and the name of the root directory in each case form a search criterion for querying the data,
- the stored file is stored under the file name in at least one directory of the directory structure, wherein the date item stored in the directory with the file can be queried using the properties of the date item and the search criteria of the directory path from the directory in which the file is stored to the root directory, wherein a reference file is stored in a directory of the directory structure, wherein the reference file contains at least one path identifier by means of which a further directory of the directory structure or a storage location outside the directory structure can be identified, and, in order to query the data, the computer system
- defines the properties of the data to be queried,
- defines a number of search criteria in a predetermined order,
- wherein the properties and the search criteria are specified by a user,
- forms a file name and a directory path from the defined properties and search criteria, wherein the file name is formed from the defined properties by linking the defined properties and the directory path is formed from the search criteria by linking the search criteria,
- switches to the directory specified by the directory path and opens the file specified by the file name,
- wherein a standard value is defined for at least one property of the data to be queried, wherein the file name is formed from the standard value and the remaining properties if the file with the file name formed by the defined properties is not contained in the directory path,
- wherein, if the file specified by the file name does not exist in the directory specified by the directory path, the file is searched for in the higher-level directories of the directory path, wherein the file specified by the file name is opened in the higher-level directories of the directory path, and
- reads out the path identifier from the reference file and, in order to query the data, switches to the directory specified by the path identifier in order to search there for the file specified by the file name,
- provides the content contained in the opened file as the result of the query.

2. Method according to claim 1, wherein the properties comprise a type, a variable and/or a format.

3. Method according to either of the preceding claims, wherein the file is stored in multiple directories under the same file name.

4. Method according to any of the preceding claims, wherein the file stored in a directory overwrites a file inherited in this directory, as a result of which the inheritance hierarchy is disrupted if the file stored in this directory and the file inherited in this directory have the same file name.

5. Method according to the preceding claim, wherein the at least one path identifier comprises a relative and/or absolute path identifier.

6. Method according to any of the preceding claims, wherein the directory structure or a portion of the directory structure are replicated together with the files stored in the directories, wherein the replication comprises copying the corresponding directory structure and the files stored therein to another storage location.

7. Method according to any of the preceding claims, wherein a file in the higher-level directories is ignored if a file with the same file name already exists in a directory there below.

## Revendications

1. Procédé d'interrogation efficace de données dans un système informatique, selon lequel
- un fichier est enregistré pour chaque donnée, les propriétés de la donnée étant encodées dans le nom de fichier du fichier,
- une structure de répertoires hiérarchique conçue sous la forme d'une structure arborescente et comportant un répertoire racine est enregistrée dans le système informatique, à la fois des fichiers et des répertoires pouvant se trouver à chaque niveau de la structure de répertoires, chaque répertoire présentant un nom de répertoire unique au sein d'un niveau de la structure de répertoires, et chaque nom de répertoire et le nom du répertoire racine formant un critère de recherche pour l'interrogation des données,
- le fichier enregistré est enregistré sous le nom de fichier dans au moins un répertoire de la structure de répertoires, la donnée enregistrée avec le fichier dans le répertoire pouvant être interrogée à l'aide des propriétés de la donnée et des critères de recherche du chemin de répertoire depuis le répertoire dans lequel le fichier est enregistré jusqu'au répertoire racine,
un fichier de référence étant enregistré dans un répertoire de la structure de répertoires, le fichier de référence contenant au moins une spécification de chemin permettant d'identifier un autre répertoire de la structure de répertoires ou un emplacement d'enregistrement en dehors de la structure de répertoires,
et le système informatique, afin d'interroger les données,
- définissant les propriétés des données à interroger,
- définissant un certain nombre de critères de recherche dans un ordre prédéterminé,
- les propriétés et les critères de recherche étant spécifiés par un utilisateur,
- formant un nom de fichier et un chemin de répertoire à partir des propriétés et des critères de recherche définis, le nom de fichier étant formé à partir des propriétés définies en liant les propriétés définies, et le chemin du répertoire étant formé à partir des critères de recherche en liant les critères de recherche,
- passant au répertoire spécifié par le chemin du répertoire et ouvrant le fichier spécifié par le nom de fichier,
- une valeur standard étant définie pour au moins une propriété des données à interroger, le nom de fichier étant formé à partir de la valeur standard et des propriétés restantes si le fichier comportant le nom de fichier formé par les propriétés définies n'est pas contenu dans le chemin de répertoire,
- si le fichier spécifié par le nom de fichier n'existe pas dans le répertoire spécifié par le chemin de répertoire, le fichier est recherché dans les répertoires supérieurs du chemin du répertoire, le fichier spécifié par le nom de fichier étant ouvert dans les répertoires supérieurs du chemin de répertoire, et
- lisant la spécification de chemin à partir du fichier de référence et passant dans le répertoire spécifié par la spécification de chemin pour l'interrogation des données afin de rechercher le fichier spécifié par le nom de fichier,
- fournissant le contenu du fichier ouvert à la suite de l'interrogation.

2. Procédé selon la revendication 1, selon lequel les propriétés comprennent un type, une variable et/ou un format.

3. Procédé selon l'une des revendications précédentes, selon lequel le fichier est enregistré dans plusieurs répertoires sous le même nom de fichier.

4. Procédé selon l'une des revendications précédentes, selon lequel le fichier enregistré dans un répertoire écrase un fichier hérité dans ce répertoire, interrompant la hiérarchie d'héritage, si le fichier enregistré dans ce répertoire et le fichier hérité dans ce répertoire présentent le même nom de fichier.

5. Procédé selon la revendication précédente, selon lequel l'au moins une spécification de chemin comprend une spécification de chemin relative et/ou une spécification de chemin absolue.

6. Procédé selon l'une des revendications précédentes, selon lequel la structure de répertoires ou une section de la structure de répertoires est répliquée conjointement avec les fichiers enregistrés dans les répertoires, la réplication consistant à copier la structure de répertoires correspondante et les fichiers qui y sont enregistrés vers un autre emplacement d'enregistrement.

7. Procédé selon l'une des revendications précédentes, selon lequel un fichier dans les répertoires supérieurs est ignoré si un fichier ayant le même nom de fichier existe déjà dans un répertoire subordonné.
